# EUROPÄISCHE PATENTSCHRIFT

(11) **EP 2 358 575 B1**
(45) Veröffentlichungstag und Bekanntmachung des Hinweises auf die Patenterteilung: **01.05.2013**
(21) Anmeldenummer: 09752186.8
(22) Anmeldetag: 16.11.2009
(51) Int. Cl.: B60W 30/182, B60W 30/18

(54) **VERFAHREN ZUM BETREIBEN EINES ANTRIEBSSTRANGS**
METHOD FOR OPERATING A DRIVETRAIN
PROCÉDÉ DE FONCTIONNEMENT D'UNE CHAÎNE CINÉMATIQUE

(30) Priorität: 15.12.2008 DE 102008054663
(43) Veröffentlichungstag der Anmeldung: 24.08.2011
(73) Patentinhaber: ZF Friedrichshafen AG, 88038 Friedrichshafen (DE)
(72) Erfinder: PETZOLD, Rainer, 88045 Friedrichshafen (DE)
(86) Internationale Anmeldenummer: PCT/EP2009/065207
(87) Internationale Veröffentlichungsnummer: WO 2010/072468

(56) Entgegenhaltungen:
- EP-A2- 1 923 291
- DE-A1- 10 307 462
- DE-U1- 29 900 332

## Beschreibung

Die Erfindung betrifft ein Verfahren zum Betreiben eines Antriebsstrangs eines Kraftfahrzeugs, wie bekannt aus DE 299 00 332 U.

Die Hauptkomponenten eines Antriebsstrangs eines Kraftfahrzeugs sind ein Antriebsaggregat und ein Getriebe. Das Getriebe wandelt Drehzahlen und Drehmomente und stellt so ein Zugkraftangebot des Antriebsaggregats an einem Abtrieb des Antriebsstrangs bereit. Die hier vorliegende Erfindung betrifft ein Verfahren zum Betreiben eines Antriebsstrangs, dessen Antriebsaggregat zumindest einen Verbrennungsmotor und gegebenenfalls zusätzlich einen Elektromotor umfasst. Das erfindungsgemäße Verfahren ist demnach sowohl bei einem konventionellen Kraftfahrzeug, dessen Antriebsaggregat ausschließlich von einem Verbrennungsmotor gebildet wird, sowie bei einem Hybridfahrzeug, dessen Antriebsaggregat von einem Elektromotor und einem Verbrennungsmotor gebildet wird, einsetzbar.

Aus dem Stand der Technik ist es bereits bekannt, abhängig von Betriebsbedingungen des Antriebsstrangs während einer Fahrt desselben den Antriebsstrang z. B. über eine zwischen das Antriebsaggregat und das Getriebe geschaltete Kupplung zu öffnen, um bei geöffnetem Antriebsstrang denselben entweder bei laufendem Verbrennungsmotor in einem Rollmodus oder bei ausgeschaltetem Verbrennungsmotor in einen Segelmodus zu betreiben.

So ist es aus der DE 26 04 472 A1 bereits bekannt, dann, wenn ein Kraftfahrzeug auf glatter und ebener Straße bei einer definierten Geschwindigkeit fährt, den Verbrennungsmotor bei geöffnetem Antriebsstrang anzuhalten, und dann, wenn die Geschwindigkeit des Kraftfahrzeugs auf einen Wert unterhalb der definierten Geschwindigkeit gesunken ist, den Antriebsstrang zu schließen und den Verbrennungsmotor erneut anzulassen.

Das Öffnen und Schließen des Antriebsstrangs erfolgt demnach nach der DE 26 04 472 A1 abhängig von einer Geschwindigkeit des Kraftfahrzeugs und damit des Antriebsstrangs.

Nach der DE 602 07 886 T2 erfolgt die Aktivierung einer Freilauffunktion für einen Antriebsstrang eines Kraftfahrzeugs ebenfalls nur dann, wenn das Kraftfahrzeug mit einer festgelegten Geschwindigkeit fährt.

In der DE 103 27 438 A1 wird vorgeschlagen, eine Segelfunktion für ein Fahrzeug abhängig davon zu aktivieren, welches Fahrprogramm gewählt wurde, ob ein Leerlaufschalter aktiviert wurde, ob eine Bremse getätigt wurde und/oder welcher Gang im Getriebe gewählt wurde.

Nach dem Stand der Technik erfolgt das Öffnen oder Schließen des Antriebsstrangs zur Aktivierung oder Deaktivierung eines Rollmodus oder Segelmodus demnach entweder strikt geschwindigkeitsabhängig oder abhängig von der Betätigung eines entsprechenden Schalters durch den Fahrer und/oder abhängig von der Betätigung einer Bremse durch den Fahrer und/oder abhängig von einem im Getriebe gewählten Gang. Hiermit kann zwar bereits in gewissem Umfang durch das Öffnen des Antriebsstrangs ein Kraftstoffverbrauch reduziert werden, das Öffnen des Antriebsstrangs unterliegt jedoch starken Einschränkungen, sodass letztendlich der Kraftstoffverbrauch eines Antriebsstrangs unter Ausnutzung des Rollmodus oder Segelmodus nicht maximal reduziert werden kann.

Hiervon ausgehend liegt der vorliegenden Erfindung das Problem zu Grunde, ein neuartiges Verfahren zum Betreiben eines Antriebsstrangs eines Kraftfahrzeugs zu schaffen.

Dieses Problem wird durch ein Verfahren gemäß Anspruch 1 gelöst.

Erfindungsgemäß wird während der Fahrt des Antriebsstrangs fortlaufend abhängig von einem Fahrerwunsch eine Energiebilanz für den Antriebsstrang erstellt, wobei abhängig von dieser Energiebilanz der Antriebsstrang geöffnet oder geschlossen wird, um den Rollmodus oder den Segelmodus zu aktivieren oder zu deaktivieren.

Beim erfindungsgemäßen Verfahren zum Betreiben eines Antriebsstrangs erfolgt das Öffnen des Antriebsstrangs nicht abhängig von einer festen Geschwindigkeit des Kraftfahrzeugs oder abhängig von einer manuellen Betätigung eines Schalters über einen Fahrer, sondern vielmehr abhängig von einer Energiebilanz, die während der Fahrt fortlaufend für den Antriebsstrang erstellt wird. Diese zu erstellende Energiebilanz, von der das Öffnen oder Schließen des Antriebsstrangs und damit die Aktivierung oder Deaktivierung des Rollmodus oder Segelmodus abhängig ist, erfolgt abhängig von einem ermittelten Fahrerwunsch und gegebenenfalls abhängig von Fahrtstreckendaten.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:

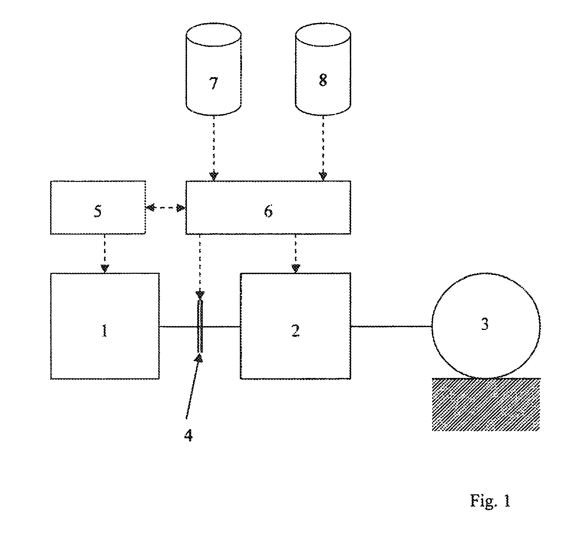

- Fig. 1: ein schematisiertes Antriebsstrangschema eines Kraftfahrzeugs, bei welchem das erfindungsgemäße Verfahren einsetzbar ist.

Die hier vorliegende Erfindung betrifft ein Verfahren zum Betreiben eines Antriebsstrangs eines Kraftfahrzeugs, wobei Fig. 1 exemplarisch ein Antriebsstrangschema eines möglichen Antriebsstrangs eines Kraftfahrzeugs zeigt, bei welchem das erfindungsgemäße Verfahren eingesetzt werden kann.

Der in Fig. 1 schematisiert dargestellte Antriebsstrang verfügt über einen Verbrennungsmotor 1 und ein Getriebe 2, wobei das Getriebe 2 zwischen den Verbrennungsmotor 1 und einen Abtrieb 3 des Antriebsstrangs geschaltet ist und ein Zugkraftangebot des Verbrennungsmotors 1 umsetzt und am Abtrieb 3 bereitstellt. Zwischen dem Verbrennungsmotor 1 und dem Getriebe 2 ist eine Kupplung 4 geschaltet, über die der Antriebsstrang geöffnet und geschlossen werden kann.

Bei der in Fig. 1 gezeigten Kupplung 4 handelt es sich um ein getriebeexternes Anfahrelement. Anstelle eines solchen getriebeexternen Anfahrelements kann der Antriebsstrang auch ein getriebeintemes Anfahrelement umfassen, über welches der Antriebsstrang geöffnet und geschlossen werden kann.

Der Antriebsstrang der Fig. 1 verfügt über ein als Verbrennungsmotor 1 ausgebildetes Antriebsaggregat. Die Erfindung ist auch bei einem Antriebsstrang einsetzbar, der als Antriebsaggregat einen Hybridantrieb umfasst, wobei ein Hybridantrieb zusätzlich zum Verbrennungsmotor auch einen Elektromotor umfasst.

Gemäß Fig. 1 ist dem Verbrennungsmotor 1 eine Motorsteuerungseinrichtung 5 und dem Getriebe 2 eine Getriebesteuerungseinrichtung 6 zugeordnet. Die Motorsteuerungseinrichtung 5 steuert und/oder regelt den Betrieb des Verbrennungsmotors 1. Die Getriebesteuerungseinrichtung 6 steuert und/oder regelt den Betrieb des Getriebes 2. Die Motorsteuerungseinrichtung 5 und die Getriebesteuerungseinrichtung 6 können hierzu Daten austauschen.

Über die Getriebesteuerungseinrichtung 6 kann auch die Kupplung 4 angesteuert werden, um dieselbe zu öffnen oder zu schließen und damit den Antriebsstrang zu öffnen oder zu schließen.

Es gehört bereits zum Stand der Technik, abhängig von definierten Betriebsbedingungen eines Antriebsstrangs denselben zu öffnen, um bei geöffnetem Antriebsstrang denselben entweder bei laufendem Verbrennungsmotor 1 in einem Rollmodus oder bei ausgeschaltetem Verbrennungsmotor 1 in einem Segelmodus zu betreiben. Die hier vorliegende Erfindung betrifft nun ein Verfahren zum Betreiben eines Antriebsstrangs, und zwar solche Details, in Abhängigkeit derer der Antriebsstrang geöffnet oder geschlossen wird, um den Rollmodus oder den Segelmodus für den Antriebsstrang zu aktivieren oder zu desaktivieren.

Im Sinne der hier vorliegenden Erfindung wird während der Fahrt des Antriebsstrangs fortlaufend eine Energiebilanz für den Antriebsstrang erstellt, wobei die Energiebilanz zumindest von einem Fahrerwunsch 7 abhängig ist. Abhängig von der erstellten Energiebilanz wird der Antriebsstrang geöffnet oder geschlossen, um den Rollmodus oder den Segelmodus für den Antriebsstrang zu aktivieren oder zu deaktivieren. Vorzugsweise wird die Energiebilanz nicht nur auf Basis des Fahrerwunschs 7 erstellt, sondern zusätzlich auch abhängig von Fahrtstreckendaten 8.

In Fig. 1 werden der Fahrerwunsch 7 und die Fahrtstreckendaten 8 der Getriebesteuerungseinrichtung 6 ummittelbar bereitgestellt. Im Unterschied hierzu ist es auch möglich, den Fahrerwunsch 7 und/oder die Fahrtstreckendaten 8 der Getriebesteuerungseinrichtung 6 mittelbar über die Motorsteuerungseinrichtung 5 zur Verfügung zu stellen.

Vorzugsweise wird der Fahrerwunsch 7 abhängig von einer Fahrpedalbetätigung und/oder einer Bremspedalbetätigung ermittelt. Alternativ oder zusätzlich ist es auch möglich, den Fahrerwunsch 7 abhängig von Daten einer Fahrtregelungseinrichtung zu ermitteln, wobei unter einer Fahrtregelungseinrichtung zum Beispiel ein Tempomat oder ein Abstandsregelungssystem verstanden werden soll.

Bei einem Tempomat handelt es sich um eine Einrichtung, mithilfe derer für einen Antriebsstrang eine feste Fahrzeuggeschwindigkeit vorgegeben werden kann, die der Antriebsstrang unabhängig vom Streckenprofil der Fahrtstrecke einhalten soll. Mit einer Abstandsregelungseinrichtung eines Kraftfahrzeugs wird während der Fahrt desselben permanent ein Abstand zu einem davor fahrenden Kraftfahrzeug erfasst und dann, wenn sich der Abstand ändert, das Kraftfahrzeug abgebremst oder beschleunigt, um einen definierten Abstand zu dem davor fahrenden Kraftfahrzeug einzuhalten.

Abhängig von der Fahrpedalbetätigung und/oder der Bremspedalbetätigung und/oder von Daten einer Fahrtregelungseinrichtung wird als Fahrerwunsch 7 eine Fahrzeuggeschwindigkeit und/oder eine positive Fahrzeugbeschleunigung und/oder eine negative Fahrzeugbeschleunigung ermittelt. Bei einer positiven Fahrzeugbeschleunigung wird die Geschwindigkeit des Kraftfahrzeugs erhöht, bei einer negativen Fahrzeugbeschleunigung wird dasselbe abgebremst und demnach die Geschwindigkeit desselben verringert.

Als Fahrtstreckendaten 8 werden bei der Erstellung der Energiebilanz für den Antriebsstrang vorzugsweise Daten über die Neigung der Fahrtstrecke berücksichtigt. Die Neigung der Fahrtstrecke kann entweder mithilfe eines Neigungssensors des Kraftfahrzeugs messtechnisch oder aus fahrdynamischen Daten rechnerisch ermittelt werden. Solche Details, welche die Ermittlung der Neigung einer Fahrtstrecke betreffen, sind dem hier angesprochenen Fachmann geläufig und bedürfen keiner näheren Erläuterung.

Als weitere Fahrtstreckendaten 8 können bei der Energiebilanz für den Antriebsstrang Daten über die Verkehrslage entlang der Fahrtstrecke berücksichtig werden, die zum Beispiel über ein Navigationssystem bereitgestellt werden.

Ebenfalls ist es möglich, als Fahrtstreckendaten 8 bei der Erstellung der Energiebilanz für den Antriebsstrang solche Daten zu berücksichtigen, die von intelligenten Verkehrsschildern gesendet und vom Kraftfahrzeug empfangen werden, wobei die Verkehrsschilder entlang der Fahrtstrecke positioniert sind.

Wie bereits ausgeführt, wird abhängig vom Fahrerwunsch 7 und den Fahrtstreckendaten 8 eine Energiebilanz für den Antriebsstrang durchgeführt, nämlich derart, dass abhängig vom Fahrerwunsch 7 sowie abhängig von den Fahrtstreckendaten 8 ein Zugmoment und/oder ein Schubmoment errechnet wird, welches erforderlich ist, um den Fahrerwunsch am Antriebsstrang umzusetzen, wobei abhängig vom errechneten Zugmoment und/oder Schubmoment der Antriebsstrang geöffnet oder geschlossen wird, um den Rollmodus oder den Segelmodus für den Antriebsstrang zu aktivieren oder zu deaktivieren. Dann, wenn das errechnete, zur Umsetzung des Fahrerwunschs benötigte Zugmoment und/oder Schubmoment in etwa Null beträgt, wird der Antriebsstrang geöffnet, um den Rollmodus oder den Segelmodus für den Antriebsstrang zu aktivieren. Dann hingegen, wenn das über die Energiebilanz bestimmte, benötigte Zugmoment und/oder Schubmoment um mehr als einen definierten Grenzwert von Null abweicht, wird der Antriebsstrang geschlossen, um so den Rollmodus oder den Segelmodus zu deaktivieren.

Dann, wenn zum Beispiel aus einer Fahrpedalbetätigung als Fahrerwunsch 7 eine positive Fahrzeugbeschleunigung ermittelt wird und bei geöffnetem Antriebsstrang die gewünschte, positive Fahrzeugbeschleunigung unterschritten wird, wird der Antriebsstrang geschlossen und über das Antriebsaggregat, nämlich in Fig. 1 über den Verbrennungsmotor 1, beschleunigt, wohingegen dann, wenn als Fahrerwunsch 7 eine positive Fahrzeugbeschleunigung ermittelt wird und bei geöffnetem Antriebsstrangs die gewünschte, positive Fahrzeugbeschleunigung überschritten wird, der Antriebsstrang geschlossen und über das Antriebsaggregat, nämlich im Ausführungsbeispiel der Fig. 1 über den Verbrennungsmotor 1, gebremst wird.

Wird als Fahrerwunsch 7 eine negative Fahrzeugbeschleunigung ermittelt und bei geöffnetem Antriebsstrang die gewünschte, negative Fahrzeugbeschleunigung überschritten, so wird der Antriebsstrang geschlossen und über das Antriebsaggregat, nämlich in Fig. 1 über den Verbrennungsmotor 1, gebremst. Dann hingegen, wenn in diesem Fall die gewünschte, negative Fahrzeugbeschleunigung unterschritten wird, wird der Antriebsstrangs geschlossen und über den Verbrennungsmotor 1 beschleunigt.

Dann, wenn über das Antriebsaggregat, also gemäß Fig. 1 über den Verbrennungsmotor 1, kein ausreichendes Bremsmoment bereitgestellt werden kann, kann zusätzlich über eine Betriebsbremse gebremst werden. Dann, wenn der Antriebsstrang einen Retarder umfasst, kann auch über den Retarder gebremst werden.

Ob bei geöffnetern Antriebsstrang der Rollmodus mit laufendem Verbrennungsmotor 1 oder der Segelmodus mit abgeschaltetem Verbrennungsmotor 1 aktiviert wird, wird insbesondere von der Bauart des Antriebsstrangs abhängig gemacht. Nur dann, wenn zum Beispiel eine Bremskraftunterstützung und/oder Lenkungsunterstützung bei ausgeschaltetem Verbrennungsmotor 1 aktiv sind, darf während der Fahrt der Verbrennungsmotor 1 ausgeschaltet werden.

Die Entscheidung, ob bei geöffnetem Antriebsstrang der Rollmodus oder der Segelmodus aktiviert wird, kann zusätzlich auch vom Leerlaufkraftstoffverbrauch des Verbrennungsmotors 1 abhängig gemacht werden.

Soll im Anschluss an das Öffnen eines Antriebsstrangs derselbe nachfolgend wieder geschlossen werden, so kann nach dem Schließen des Antriebsstrangs im Getriebe 2 ein anderer Gang eingelegt werden, als derjenige, der vor dem Öffnen des Antriebsstrangs im Getriebe 2 eingelegt war.

Es ist jedoch genauso möglich, dass vor dem Öffnen des Antriebsstrangs und nach dem Schließen desselben im Getriebe 2 derselbe Gang eingelegt ist.

Es kann vorgesehen sein, dass die messtechnisch oder rechnerisch erfasste Neigung der Fahrtstrecke einem Fahrer mithilfe eines Displays angezeigt wird, um so die Betätigung des Fahrpedals und/oder Bremspedals durch den Fahrer zu beeinflussen.

Nach einer vorteilhaften Weiterbildung der Erfindung kann beim Öffnen sowie Schließen des Antriebsstrangs anhand einer sich einstellenden Reaktion des Antriebsstrangs ein Schubmoment des Antriebsaggregats, also in Fig. 1 ein Verbrennungsmotorschubmoment, berechnet werden. Dieses kann dann für weitere Regelungs- und/oder Steuerungsaufgaben im Antriebsstrang verwendet werden.

### Bezugszeichen

- 1: Verbrennungsmotor
- 2: Getriebe
- 3: Abtrieb
- 4: Kupplung
- 5: Motorsteuerungseinrichtung
- 6: Getriebesteuerungseinrichtung
- 7: Fahrerwunsch
- 8: Fahrtstreckendaten

## Patentansprüche

1. Verfahren zum Betreiben eines Antriebsstrangs eines Kraftfahrzeugs, wobei der Antriebsstrang ein zumindest einen Verbrennungsmotor (1) umfassendes Antriebsaggregat und ein zwischen das Antriebsaggregat und einen Abtrieb (3) geschaltetes Getriebe (2) aufweist, und wobei eine Getriebesteuerungseinrichtung und/oder eine Motorsteuerungseinrichtung (5) abhängig von definierten Betriebsbedingungen während einer Fahrt des Antriebsstrangs den Antriebsstrang öffnet, so dass bei geöffnetem Antriebsstrang derselbe entweder bei laufenden Verbrennungsmotor in einem Rollmodus oder ausgeschaltetem Verbrennungsmotor (1) in einem Segelmodus betrieben wird, **dadurch gekennzeichnet, dass** während der Fahrt des Antriebsstrangs fortlaufend abhängig von einem Fahrerwunsch (7) und von Fahrstreckendaten (8) eine Energiebilanz für den Antriebsstrang derart erstellt wird, dass abhängig vom Fahrerwunsch (7) sowie abhängig von Fahrtstreckendaten (8) ein Zugmoment und/oder Schubmoment errechnet wird, welches erforderlich ist, um den Fahrerwunsch (7) am Antriebsstrang umzusetzen, wobei abhängig vom errechneten Zugmoment und/oder Schubmoment der Antriebsstrang geöffnet oder geschlossen wird, um den Rollmodus oder den Segelmodus für den Antriebsstrang zu aktivieren oder zu deaktivieren.

2. Verfahren nach Anspruch 1, **dadurch gekennzeichnet, dass** der Fahrerwunsch (7) abhängig von einer Fahrpedalbetätigung und/oder Bremspedalbetätigung ermittelt wird.

3. Verfahren nach Anspruch 1 oder 2, **dadurch gekennzeichnet, dass** der Fahrerwunsch (7) abhängig von Daten einer Fahrtregelungseinrichtung ermittelt wird.

4. Verfahren nach einem der Ansprüche 1 bis 3, **dadurch gekennzeichnet, dass** als Fahrerwunsch (7) eine Fahrzeuggeschwindigkeit und/oder eine positive Fahrzeugbeschleunigung und/oder eine negative Fahrzeugbeschleunigung ermittelt wird.

5. Verfahren nach einem der Ansprüche 1 bis 4, **dadurch gekennzeichnet, dass** die Energiebilanz für den Antriebsstrang abhängig vom Fahrerwunsch (7) und zusätzlich abhängig von Fahrtstreckendaten (8) durchgeführt wird.

6. Verfahren nach Anspruch 5, **dadurch gekennzeichnet, dass** als Fahrtstreckendaten (8) die Neigung der Fahrtstrecke bei der Erstellung der Energiebilanz für den Antriebsstrang berücksichtigt wird.

7. Verfahren nach Anspruch 5 oder 6, **dadurch gekennzeichnet, dass** als Fahrtstreckendaten (8) die Verkehrslage entlang der Fahrtstrecke bei der Erstellung der Energiebilanz für den Antriebsstrang berücksichtigt wird.

8. Verfahren nach einem der Ansprüche 5 bis 7, **dadurch gekennzeichnet, dass** als Fahrtstreckendaten (8) Daten, die von entlang der Fahrtstrecke positionierten, intelligenten Verkehrsschildern gesendet werden, bei der Erstellung der Energiebilanz für den Antriebsstrang berücksichtigt wird.

9. Verfahren nach Anspruch 1, **dadurch gekennzeichnet, dass** dann, wenn das errechnete, zur Umsetzung des Fahrerwunsches (7) benötigte Zugmoment und/oder Schubmoment in etwa Null beträgt, der Antriebsstrang geöffnet wird, um den Rollmodus oder den Segelmodus zu aktivieren.

10. Verfahren nach Anspruch 1 oder 9, **dadurch gekennzeichnet, dass** dann, wenn als Fahrerwunsch (7) eine positive Fahrzeugbeschleunigung ermittelt wird und bei geöffnetem Antriebsstrang die gewünschte positive Fahrzeugbeschleunigung unterschritten wird, der Antriebsstrang geschlossen und über das Antriebsaggregat beschleunigt wird, wohingegen dann, wenn als Fahrerwunsch (7) eine positive Fahrzeugbeschleunigung ermittelt wird und bei geöffnetem Antriebsstrang die gewünschte positive Fahrzeugbeschleunigung überschritten wird, der Antriebsstrang geschlossen und über das Antriebsaggregat gebremst wird.

11. Verfahren nach Anspruch 1, 9 oder 10, **dadurch gekennzeichnet, dass** dann, wenn als Fahrerwunsch (7) eine negative Fahrzeugbeschleunigung ermittelt wird und bei geöffnetem Antriebsstrang die gewünschte negative Fahrzeugbeschleunigung überschritten wird, der Antriebsstrang geschlossen und über das Antriebsaggregat gebremst wird, wohingegen dann, wenn als Fahrerwunsch (7) eine negative Fahrzeugbeschleunigung ermittelt wird und bei geöffnetem Antriebsstrang die gewünschte negative Fahrzeugbeschleunigung überschritten wird, der Antriebsstrang geschlossen und über das Antriebsaggregat beschleunigt wird.

12. Verfahren nach Anspruch 10 oder 11, **dadurch gekennzeichnet, dass** bei Bedarf zusätzlich über einen Retarder des Antriebsstrangs und/oder eine Betriebsbremse des Antriebsstrangs gebremst wird.

13. Verfahren nach einem der Ansprüche 1 bis 12, **dadurch gekennzeichnet, dass** abhängig vom Leerlaufkraftstoffverbrauch des Verbrennungsmotors (1) und/oder abhängig von der Baurat des Antriebsstrangs entschieden wird, ob bei geöffnetem Antriebsstrang der Rollmodus oder der Segelmodus aktiviert wird.

## Claims

1. Method for operating a drivetrain of a motor vehicle, wherein the drivetrain has a drive assembly comprising at least one internal combustion engine (1) and a transmission (2) positioned between the drive assembly and an output (3), and wherein a transmission control device and/or an engine control device (5) opens the drivetrain as a function of defined operating conditions during travel of the drivetrain so that, with the drivetrain open, said drivetrain is operated either with a running internal combustion engine in a rolling mode or a switched-off internal combustion engine (1) in a freewheel mode, **characterized in that**, during travel of the drivetrain, an energy balance for the drivetrain is adjusted continuously as a function of a driver's demand (7) and of driving route data (8) in such a manner that, as a function of the driver's demand (7) and as a function of driving route data (8), a traction torque and/or thrust torque is calculated which is required to implement the driver's demand (7) at the drivetrain, wherein the drivetrain is opened or closed as a function of the calculated traction torque and/or thrust torque in order to activate or deactivate the rolling mode or the freewheel mode for the drivetrain.

2. Method according to Claim 1, **characterized in that** the driver's demand (7) is identified as a function of an accelerator pedal actuation and/or brake pedal actuation.

3. Method according to Claim 1 or 2, **characterized in that** the driver's demand (7) is identified as a function of data of a journey control device.

4. Method according to one of Claims 1 to 3, **characterized in that** a vehicle speed and/or a positive vehicle acceleration and/or a negative vehicle acceleration is/are identified as the driver's demand (7).

5. Method according to one of Claims 1 to 4, **characterized in that** the energy balance for the drivetrain is carried out as a function of the driver's demand (7) and additionally as a function of driving route data (8).

6. Method according to Claim 5, **characterized in that** the inclination of the driving route is taken into account as the driving route data (8) in producing the energy balance for the drivetrain.

7. Method according to Claim 5 or 6, **characterized in that** the traffic situation along the driving route is taken into account as the driving route data (8) in producing the energy balance for the drivetrain.

8. Method according to one of Claims 5 to 7, **characterized in that** data which is transmitted by intelligent traffic signs positioned along the driving route is taken into account as the driving route data (8) in producing the energy balance for the drivetrain.

9. Method according to Claim 1, **characterized in that**, when the calculated traction torque and/or thrust torque required to implement the driver's demand (7) is approximately zero, the drivetrain is opened in order to activate the rolling mode or the freewheel mode.

10. Method according to Claim 1 or 9, **characterized in that**, when a positive vehicle acceleration is identified as the driver's demand (7) and, with the drivetrain open, the desired positive vehicle acceleration is undershot, the drivetrain is closed and accelerated via the drive assembly, whereas, when a positive vehicle acceleration is identified as the driver's demand (7) and, with the drivetrain open, the desired positive vehicle acceleration is exceeded, the drivetrain is closed and braked via the drive assembly.

11. Method according to Claim 1, 9 or 10, **characterized in that**, when a negative vehicle acceleration is identified as the driver's demand (7) and, with the drivetrain open, the desired negative vehicle acceleration is exceeded, the drivetrain is closed and braked via the drive assembly, whereas, when a negative vehicle acceleration is identified as the driver's demand (7) and, with the drivetrain open, the desired negative vehicle acceleration is exceeded, the drivetrain is closed and accelerated via the drive assembly.

12. Method according to Claim 10 or 11, **characterized in that**, where required, braking is additionally performed via a retarder of the drivetrain and/or a service brake of the drivetrain.

13. Method according to one of Claims 1 to 12, **characterized in that** a decision is made as a function of the idling fuel consumption of the internal combustion engine (1) and/or as a function of the design of the drivetrain as to whether, with the drivetrain open, the rolling mode or the freewheel mode is activated.

## Revendications

1. Procédé de fonctionnement d'une chaîne cinématique d'un véhicule automobile, dans lequel la chaîne cinématique présente un groupe motopropulseur, comprenant au moins un moteur à combustion interne (1), et une transmission (2) montée entre le groupe motopropulseur et une prise de force (3), et dans lequel un dispositif de commande de transmission et/ou un dispositif de commande de moteur (5), en fonction de conditions de fonctionnement définies pendant la conduite de la chaîne cinématique, ouvre la chaîne cinématique de telle sorte que lorsque la chaîne cinématique est ouverte, celle-ci fonctionne soit avec le moteur à combustion interne tournant en mode de roulement, soit avec le moteur à combustion interne coupé (1) en mode de roue libre, **caractérisé en ce que** pendant la conduite de la chaîne cinématique, un bilan énergétique pour la chaîne cinématique est établi en continu en fonction d'un souhait (7) du conducteur et de données de section de route (8), de telle sorte qu'en fonction du souhait (7) du conducteur et de données de section de route (8), on calcule un couple de traction et/ou un couple de poussée nécessaire pour convertir le souhait (7) du conducteur au niveau de la chaîne cinématique, la chaîne cinématique étant ouverte ou fermée afin d'activer ou de désactiver le mode de roulement ou le mode de roue libre pour la chaîne cinématique en fonction du couple de traction et/ou du couple de poussée calculé.

2. Procédé selon la revendication 1, **caractérisé en ce que** le souhait (7) du conducteur est déterminé en fonction d'une activation de la pédale d'accélérateur et/ou de la pédale de frein.

3. Procédé selon la revendication 1 ou 2, **caractérisé en ce que** le souhait (7) du conducteur est déterminé en fonction de données d'un dispositif de régulation de conduite.

4. Procédé selon l'une quelconque des revendications 1 à 3, **caractérisé en ce que** l'on détermine en tant que souhait (7) du conducteur une vitesse du véhicule et/ou une accélération positive du véhicule et/ou une accélération négative du véhicule.

5. Procédé selon l'une quelconque des revendications 1 à 4, **caractérisé en ce que** le bilan énergétique pour la chaîne cinématique est effectué en fonction du souhait (7) du conducteur et aussi en fonction de données de section de route (8).

6. Procédé selon la revendication 5, **caractérisé en ce que** l'on tient compte en tant que données de section de route (8) de la pente de la section de route lors de l'établissement du bilan énergétique pour la chaîne cinématique.

7. Procédé selon la revendication 5 ou 6, **caractérisé en ce que** l'on tient compte en tant que données de section de route (8) de la circulation le long de la section de route lors de l'établissement du bilan énergétique pour la chaîne cinématique.

8. Procédé selon l'une quelconque des revendications 5 à 7, **caractérisé en ce que** l'on tient compte en tant que données de section de route (8) de données qui sont envoyées par des panneaux de circulation intelligents positionnés le long de la section de route, lors de l'établissement du bilan énergétique pour la chaîne cinématique.

9. Procédé selon la revendication 1, **caractérisé en ce que** lorsque le couple de traction et/ou le couple de poussée calculé, nécessaire pour convertir le souhait (7) du conducteur, vaut approximativement zéro, la chaîne cinématique est ouverte afin d'activer le mode de roulement ou le mode de roue libre.

10. Procédé selon la revendication 1 ou 9, **caractérisé en ce que** lorsque l'on détecte en tant que souhait (7) du conducteur une accélération positive du véhicule, et que, lorsque la chaîne cinématique est ouverte, l'accélération positive souhaitée du véhicule n'est pas atteinte, la chaîne cinématique est fermée et accélérée au moyen du groupe motopropulseur, tandis que lorsque l'on détecte en tant que souhait (7) du conducteur une accélération positive du véhicule et que, lorsque la chaîne cinématique est ouverte, l'accélération positive du véhicule souhaitée est dépassée, la chaîne cinématique est fermée et freinée au moyen du groupe motopropulseur.

11. Procédé selon la revendication 1, 9 ou 10, **caractérisé en ce que** lorsque l'on détecte en tant que souhait (7) du conducteur une accélération négative du véhicule et que, lorsque la chaîne cinématique est ouverte, l'accélération négative souhaitée du véhicule est dépassée, la chaîne cinématique est fermée et freinée au moyen du groupe motopropulseur, tandis que lorsque l'on détecte en tant que souhait (7) du conducteur une accélération négative du véhicule et que, lorsque la chaîne cinématique est ouverte, l'accélération négative souhaitée du véhicule est dépassée, la chaîne cinématique est fermée et accélérée au moyen du groupe motopropulseur.

12. Procédé selon la revendication 10 ou 11, **caractérisé en ce qu'**au besoin en outre, on effectue le freinage par le biais d'un retardateur de la chaîne cinématique et/ou d'un frein de service de la chaîne cinématique.

13. Procédé selon l'une quelconque des revendications 1 à 12, **caractérisé en ce qu'**en fonction de la consommation de carburant en marche à vide du moteur à combustion interne (1) et/ou en fonction de la conception de la chaîne cinématique, on décide si le mode de roulement ou le mode de roue libre est activé lorsque la chaîne cinématique est ouverte.
